Europäisches Patentamt

European Patent Office

Office européen des brevets

(19)

(11) Numéro de publication : **0 091 855 B1**

(12) **FASCICULE DE BREVET EUROPÉEN**

(45) Date de publication du fascicule du brevet :
11.12.85

(51) Int. Cl.⁴ : **B 23 D 79/02, B 22 D 11/12**

(21) Numéro de dépôt : 83400663.7

(22) Date de dépôt : 30.03.83

(54) **Appareil pour enlever les bavures sur un produit de coulée continue.**

(30) Priorité : 06.04.82 FR 8205918

(43) Date de publication de la demande :
19.10.83 Bulletin 83/42

(45) Mention de la délivrance du brevet :
11.12.85 Bulletin 85/50

(84) Etats contractants désignés :
AT BE CH DE LI LU

(56) Documents cités :
DE-A- 3 019 691
DE-C-   302 341
DE-C-   609 717
FR-A- 2 467 041
FR-A- 2 494 612
US-A- 1 508 513

(73) Titulaire : **FIVES-CAIL BABCOCK, Société anonyme**
**7 rue Montalivet**
**F-75383 Paris Cedex 08 (FR)**

(72) Inventeur : **Cazaux, Joel**
**5, rue Jean Véron**
**F-77500 Chelles (FR)**

(74) Mandataire : **Fontanié, Etienne**
**FIVES-CAIL BABCOCK 7, rue Montalivet**
**F-75383 Paris Cedex 08 (FR)**

EP 0 091 855 B1

## Description

L'invention a pour objet un appareil pour ébavurer un produit de coulée continue comportant un bâti, au moins un couteau porté par une poutre disposée transversalement à la direction de déplacement du produit coulé et appliqué par des vérins contre la face du produit coulé comportant les bavures, et des moyens pour déplacer longitudinalement le produit coulé par rapport au couteau. Un tel appareil est connu de FR-A 2 467 041.

Dans les installations de coulée continue courbe avec redressement à l'horizontale du produit coulé après solidification, les moyens d'entraînement des tronçons du produit coulé sont constitués par les rouleaux du transporteur d'évacuation situé en aval de la zone d'oxycoupage. Dans ces installations, les bavures se trouvent sur la face inférieure du produit coulé et la force exercée sur le couteau pour l'appliquer sur cette face a tendance à soulever le produit coulé et, par conséquent, diminuer l'adhérence des rouleaux au produit coulé. Si celle-ci est trop faible, la force d'entraînement exercée par les rouleaux sur le produit coulé peut être insuffisante pour vaincre la résistance au cisaillement des bavures et le fonctionnement de l'installation est perturbé.

On a également proposé de positionner rigidement le couteau de telle sorte que son bord tranchant se trouve dans le plan d'appui des rouleaux du transporteur. Cette solution nécessite un réglage fréquent de la position du couteau pour compenser l'usure et ne permet pas d'assurer un ébavurage correct lorsque le produit coulé présente des déformations verticales.

Le but de la présente invention est de remédier aux inconvénients des solutions connues et de réaliser un appareil comportant des moyens d'entraînement du produit coulé qui lui sont propres et forment avec le couteau et les moyens d'application de ce dernier un ensemble qui peut être monté facilement et rapidement dans une installation existante à la place de l'un des rouleaux du transporteur d'évacuation.

L'appareil d'ébavurage objet de l'invention est caractérisé en ce que le bâti est formé de deux flasques verticaux disposés latéralement par rapport au produit coulé, de part et d'autre de celui-ci, et reliés entre eux par des entretoises, en ce que des glissières approximativement perpendiculaires à la face du produit coulé sur laquelle se trouvent les bavures sont formées dans lesdits flasques, en ce que les extrémités de la poutre portant le couteau sont montées coulissantes dans deux de ces glissières, en ce que les autres glissières reçoivent les paliers de deux rouleaux superposés et disposés de façon à ménager entre eux un passage pour le produit coulé, et en ce que les extrémités ouvertes des glissières recevant les paliers des rouleaux sont fermées par des chapeaux sur lesquels prennent appui les vérins servant à serrer le produit coulé entre les rouleaux et les vérins servant à appliquer le couteau sur la face du produit coulé portant les bavures.

De préférence, l'appareil d'ébavurage comporte un second couteau, les deux couteaux étant disposés respectivement en amont et en aval des rouleaux, en considérant le sens d'évacuation du produit coulé, et ce second couteau étant fixé, comme le premier, sur une poutre dont les extrémités sont montées dans des glissières découpées dans les flasques du bâti et appliqué contre le produit coulé par des vérins prenant appui sur lesdits chapeaux.

Les couteaux ont la forme d'un V très ouvert dont la pointe se situe approximativement sur la ligne médiane de la face du produit coulé avec laquelle les couteaux sont en contact, et est dirigée vers l'amont pour le couteau amont et vers l'aval pour le couteau aval.

Avantageusement, l'appareil comportera une auge placée sous le couteau ou sous chacun d'eux pour recueillir les bavures détachées du produit coulé, cette auge étant supportée par le bâti de l'appareil et pouvant être enlevée facilement pour la vider.

D'autres caractéristiques de l'invention apparaîtront à la lecture de la description qui suit et se réfère aux dessins l'accompagnant qui montrent, à titre d'exemple non limitatif un mode de réalisation de l'invention et sur lesquels :

La figure 1 est une vue en élévation d'une partie d'un transporteur d'évacuation placé à la sortie d'une machine de coulée continue, non représentée, et dans lequel on a incorporé un appareil d'ébavurage conforme à l'invention ;

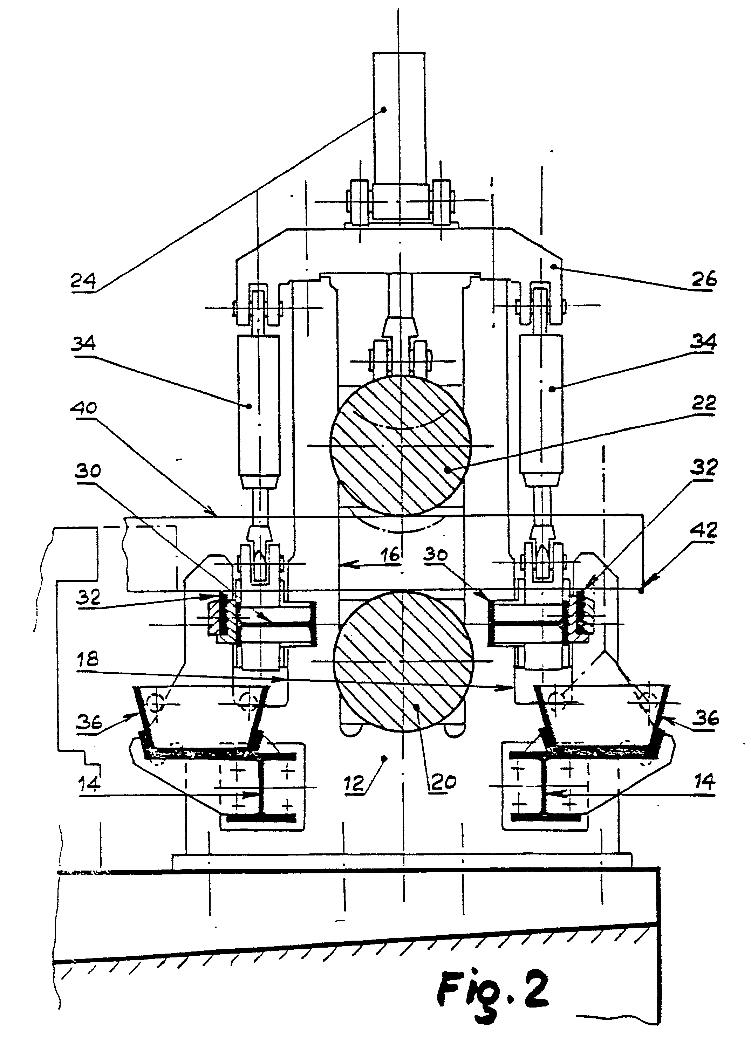

La figure 2 est une vue en élévation et en coupe de l'appareil d'ébavurage ; et

La figure 3 est une vue en plan de l'un des couteaux de l'appareil d'ébavurage.

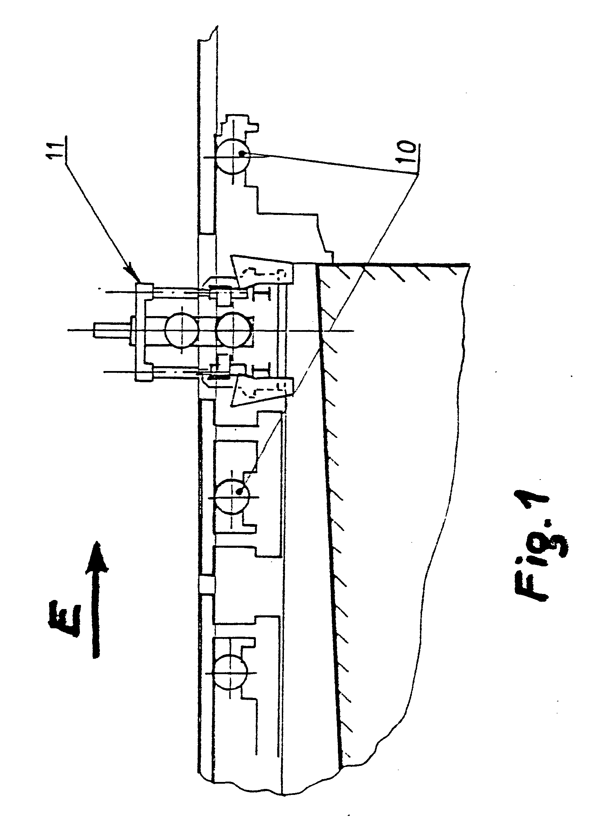

Sur la figure 1, on a représenté une partie d'un transporteur à rouleaux 10 horizontal situé en aval de la zone de tronçonnage d'une machine de coulée continue et destiné à évacuer les tronçons de produits coulés découpés au moyen d'un chalumeau. L'un des rouleaux de ce transporteur a été remplacé par un appareil d'ébavurage 11 conforme à l'invention et qui est destiné à enlever les bavures qui se forment aux extrémités des tronçons de produit coulé, sur leur face inférieure, lorsqu'on sectionne le produit coulé au moyen d'un chalumeau.

L'appareil 11 comporte un bâti formé de deux flasques latéraux 12, disposés verticalement et entretoisés par deux poutres 14. Les flasques sont découpés pour former trois glissières verticales, ouvertes à leur extrémité supérieure : une glissière médiane 16 et deux glissières latérales 18, plus étroites et plus courtes que la glissière 16 et disposées de part et d'autre de celle-ci.

Les glissières médianes des deux flasques reçoivent les paliers de deux rouleaux 20 et 22 placés l'un au-dessus de l'autre. Les paliers du rouleau inférieur 20 reposent sur le fond des glissières 16 éventuellement avec interposition de cales et les paliers du rouleau supérieur 22 sont suspendus aux tiges des pistons de deux vérins hydrauliques 24 montés sur des chapeaux 26 fixés sur le bâti et fermant l'extrémité supérieure des glissières 16. Des rainures longitudinales 28 sont usinées dans les flancs verticaux des glissières 16 et les paliers comportent des tenons s'engageant à frottement doux dans ces rainures pour reprendre les efforts axiaux des rouleaux 20 et 22. Le rouleau inférieur 20 est situé au même niveau que les rouleaux du transporteur d'évacuation 10.

Les glissières 18 reçoivent les extrémités de deux poutres horizontales 30 sur lesquelles sont fixés des couteaux 32. Ces poutres sont suspendues, par l'intermédiaire de vérins hydrauliques 34 aux chapeaux 26. Les extrémités des poutres portent des patins glissant sur les flancs verticaux des glissières 18 et munis de tenons s'engageant dans des rainures usinées dans ces flancs pour empêcher les déplacements longitudinaux des poutres.

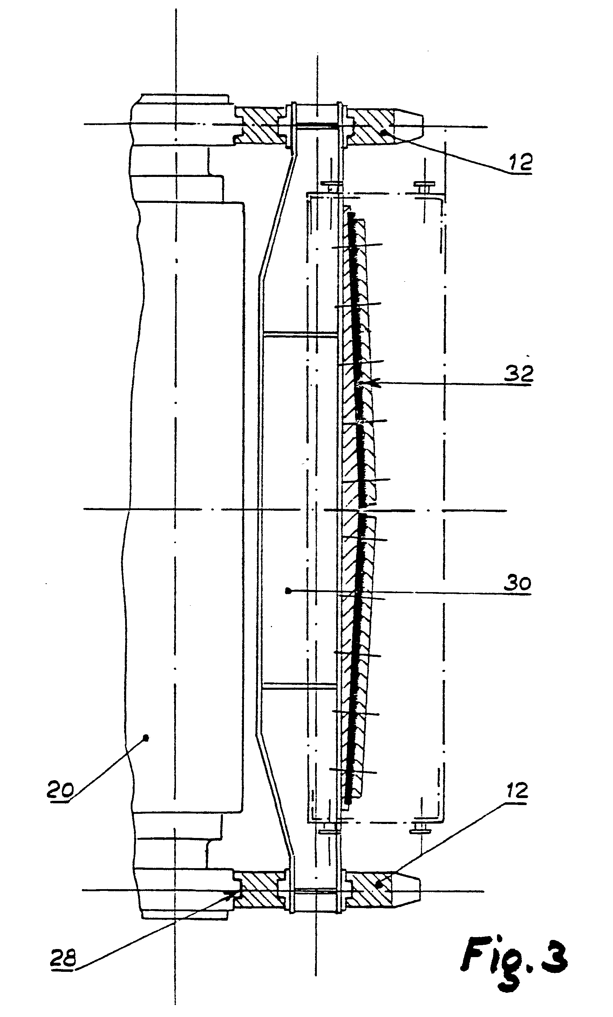

Comme on le voit sur la figure 3, chaque couteau est formé de deux éléments disposés suivant un V très ouvert dont la pointe est située approximativement dans le plan de symétrie de l'appareil, qui coïncide avec le plan médian longitudinal du transporteur d'évacuation 10, la pointe du V formé par le couteau 32 situé en amont des rouleaux 20 et 22, en considérant le sens d'évacuation du produit coulé indiqué par la flèche E sur la figure 1, étant dirigée vers l'amont et la pointe du V formé par le couteau aval étant dirigée vers l'aval.

La forme en V des couteaux permet de réduire les efforts auxquels ils sont soumis pendant l'ébavurage en assurant une attaque progressive et symétrique des bavures.

Deux auges 36 supportées par le bâti de l'appareil sont placées sous les couteaux 32 pour recueillir les bavures détachées des produits coulés.

Lorsque l'appareil d'ébavurage est en attente, le rouleau supérieur 22 est soulevé, au moyen de vérins 24, de façon que l'écartement des rouleaux soit supérieur à l'épaisseur du produit coulé, le rouleau inférieur 20 est entraîné en rotation à la même vitesse et dans le même sens que les rouleaux du transporteur 10, et les couteaux 32 sont maintenus en position basse, leur bord tranchant se situant au-dessous du plan d'appui des rouleaux du transporteur 10. Dès qu'un tronçon du produit coulé amené par le transporteur 10 s'engage entre les rouleaux 20 et 22, le rouleau 22 est appliqué par les vérins 24 sur la face supérieure des tronçons. Lorsque l'extrémité avant du tronçon de produit coulé 40 se trouve au-delà du couteau aval, les moteurs entraînant le rouleau 20 et les rouleaux du transporteur d'évacuation sont arrêtés, le couteau aval est appliqué sur la face inférieure du tronçon de produit coulé par les vérins 34 et les rouleaux sont entraînés en sens inverse pour faire reculer le tronçon de produit coulé. Au cours de ce mouvement de recul, la bavure 42 formée à l'extrémité avant du tronçon de produit coulé est cisaillée par le couteau aval. On arrête ensuite les rouleaux, on descend le couteau aval et on remet en marche les rouleaux pour faire avancer le tronçon de produit coulé dans le sens de la flèche E. Lorsque l'extrémité arrière du tronçon de produit coulé approche du couteau amont ; celui-ci est appliqué sur la face inférieure du tronçon par les vérins 34 et la bavure formée à cette extrémité est cisaillée. Le couteau amont est ensuite abaissé, le rouleau 22 soulevé et le tronçon de produit coulé évacué par le transporteur 10.

## Revendications

1. Appareil pour ébavurer un produit de coulée continue comportant un bâti, au moins un couteau (32) porté par une poutre (30) disposée transversalement à la direction de déplacement du produit coulé et appliqué par des vérins (34) contre la face du produit coulé comportant les bavures, et des moyens pour déplacer longitudinalement le produit coulé (40) par rapport au couteau, caractérisé en ce que le bâti est formé de deux flasques verticaux (12) disposés latéralement par rapport au produit coulé (40), de part et d'autre de celui-ci, et reliés entre eux par des entretoises (14), en ce que des glissières (16, 18) approximativement perpendiculaires à la face du produit coulé sur laquelle se trouvent les bavures sont formées dans lesdits flasques, en ce que les extrémités de la poutre (30) portant le couteau (32) sont montées coulissantes dans deux de ces glissières (18), en ce que les autres glissières (16) reçoivent les paliers de deux rouleaux (20, 22) superposés et disposés de façon à ménager entre eux un passage pour le produit coulé (40), et en ce que les extrémités ouvertes des glissières (16) recevant les paliers des rouleaux sont fermées par des chapeaux (26) sur lesquels prennent appui les vérins (24) servant à serrer le produit coulé entre les rouleaux et les vérins (34) servant à appliquer le couteau (32) sur la face du produit coulé portant les bavures.

2. Appareil selon la revendication 1, caractérisé en ce qu'il comporte deux couteaux (32) disposés respectivement en amont et en aval des rouleaux (20, 22), en considérant le sens de déplacement du produit coulé, chaque couteau étant fixé sur une poutre (30) dont les extrémités sont montées dans des glissières (18) découpées dans les flasques (12) du bâti et appliqué contre la face du produit coulé comportant les bavures par des vérins (34) prenant appui sur lesdits chapeaux (26).

3. Appareil selon la revendication 1 ou 2, caractérisé en ce que le ou les couteaux (32) ont la forme d'un V très ouvert dont la pointe est située approximativement dans le plan de symétrie de l'appareil et est dirigée vers l'amont pour le couteau situé en amont des rouleaux (20, 22) et vers l'aval pour le couteau situé en aval.

4. Appareil selon la revendication 1, 2 ou 3, caractérisé en ce qu'il comporte des auges (36) placées sous les couteaux (32) et supportées par le bâti de l'appareil.

## Claims

1. A burr removing apparatus for a continuously cast slab consisting of a frame, at least one cutter (32) supported by a girder (30) transversal to the displacement direction of the cast product and applied by cylinder jacks (34) against the cast product face provided with burrs, and of means to move the cast product (40) longitudinally with respect to the cutter, characterized by the fact that the frame is made up of two vertical plates (12) placed laterally with respect to the cast product (40) on both sides of the latter, and connected to each other by crosspieces (14), by the fact that slides (16, 18) approximately perpendicular to the face of the cast product provided with burrs are formed in the said side plates, by the fact that the ends of the girder (30) which supports the cutter (32) are slidingly-mounted in two of these slides (18), by the fact that the other slides (16) receive the bearings of two rollers (20, 22) which are superimposed and arranged so as to provide between them a passage for the cast product (40), and by the fact that the open ends of the slides (16) which receive the bearings of the rollers are closed by caps (26) which support the cylinder jacks (24) used to grip the cast product between the rollers and the cylinder jacks (34) used to apply the cutter (32) against the cast product face provided with burrs.

2. Apparatus according to claim 1, characterized by the fact that it has two cutters (32) respectively located upstream and downstream of the rollers (20, 22), considering the displacement direction of the cast product, each cutter being attached to a girder (30) the ends of which are mounted in slides (18) cut out into the side plates (12) of the frame and applied against the face of the cast product provided with burrs by cylinder jacks (34) supported by the said caps (20).

3. Apparatus according to claim 1 or 2, characterized by the fact that the cutter or cutters (32) has or have the shape of a very open V the pointed tip of which is located approximately in the symmetry plane of the apparatus and directed upwards for the cutter located upstream of the rollers (20, 22) and downwards for the cutter located downstream.

4. Apparatus according to claim 1, 2 or 3, characterized by the fact that it has troughs (36) located under the cutters (32) and supported by the frame of the apparatus.

## Patentansprüche

1. Vorrichtung zum Entfernen von Graten an kontinuierlich gegossenen Stücken. bestehend aus einem Rahmen, mindestens einem Messer (32), das durch einen quer zur Bewegungsrichtung des gegossenen Stückes angeordneten Träger (30) gehalten wird und durch Zylinder (34) gegen die Grate aufweisende Seite des gegossenen Stückes gedrückt wird, und aus Mitteln zur Längsbewegung des gegossenen Stückes (40) zum Messer, dadurch gekennzeichnet, dass der Rahmen durch zwei vertikale, seitlich des gegossenen Stückes (40), beiderseits desselben angeordnete und miteinander durch Abstandsstücke (14) verbundene Flansche (12) gebildet wird, das Gleitführungen (16, 18), die ungefähr senkrecht zur Seite des gegossenen Stückes, an der sich die Grate befinden, in den Flanschen gebildet sind, dass die Enden des das Messer (32) haltenden Trägers (30) in zwei von diesen Gleitführungen (18) gleitend montiert sind, dass die anderen Gleitführungen (16) die Lager von zwei Rollen (20, 22) aufnehmen, die überlagert und so angeordnet sind, dass dazwischen ein Raum für das gegossene Stück freigelassen wird, und dass die offenen Enden der die Rollenlager aufnehmenden Gleitführungen (16) durch Deckel (26) geschlossen sind, auf denen sich die Zylinder (24), die dazu dienen, das gegossene Stücke zwischen den Rollen einzuspannen, sowie die Zylinder (32), die dazu dienen, das Messer (32) auf die Grate aufweisende Seite des gegossenen Stückes zu drücken, stützen.

2. Vorrichtung nach Anspruch 1, dadurch gekennzeichnet, dass sie mit zwei Messern (32) versehen ist, die unter Berücksichtigung der Bewegungsrichtung des gegossenen Stückes vor bzw. nach den Rollen (20, 22) angeordnet sind, wobei jedes Messer auf einem Träger befestigt ist, deren Enden in Gleitführungen (18) montiert sind, die in den Flanschen (12) des Rahmens ausgeschnitten sind, und jedes Messer durch sich auf die Deckel (26) stützende Zylinder (34) gegen die Grate aufweisende Seite des gegossenen Stückes gedrückt wird.

3. Vorrichtung nach Anspruch 1 oder 3, dadurch gekennzeichnet, dass das bzw. die Messer (22) die Form eines gross geöffneten V haben, dessen Spitze ungefähr in der Symmetrieebene der Vorrichtung liegt, und nach aufwärts für das vor den Rollen (20, 22) befindliche Messer und nach abwärts für das nach den Rollen befindliche Messer gericht wird.

4. Vorrichtung nach Anspruch 1, 2 oder 3, dadurch gekennzeichnet, dass sie mit Trögen (36) versehen ist, die unterhalb der Messer (32) angeordnet sind und durch den Rahmen der Vorrichtung getragen sind.

Fig.1

0 091 855

Fig.2

2

Fig.3